# EUROPÄISCHE PATENTANMELDUNG

(11) **EP 2 258 785 A1**
(43) Veröffentlichungstag der Anmeldung: **08.12.2010**
(21) Anmeldenummer: 10164797.2
(22) Anmeldetag: 02.06.2010
(51) Int. Cl.: C09K 3/32, E03F 1/00

(54) **Substrat mit Ölbinderflocken**

(30) Priorität: 03.06.2009 DE 202009004877 U
(71) Anmelder: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(57) **Zusammenfassung**

Bei einem biologisch aktiven Substrat zum Abbau und Zurückhalten von Schadstoffen in Oberflächenwasser, wobei das Substrat Material enthält, welches Besiedlungsräume für Schadstoffe abbauende Mikrobakterien bereitstellt, und Material enthält, welches Schadstoffe zurückhaltende Eigenschaften aufweist, schlägt die Erfindung vor, dass das Substrat ein Öl zurückhaltendes, jedoch für Wasser durchlässiges Rückhaltematerial enthält. Zudem schlägt die Erfindung eine Versickerungsmulde oder einen Schachteinsatz eines Entwässerungsschachts vor, die jeweils ein solches Substrat enthalten.

## Beschreibung

Die Erfindung betrifft ein Substrat nach dem Oberbegriff des Anspruchs 1.

Derartige Substrate sind aus der Praxis bekannt. Sie weisen beispielsweise mineralische Bestandteile auf, aber auch organische, die beispielsweise eine Nahrungsgrundlage für die Mikrobakterien bereitstellen, um ein Überleben der Mikrobakterien auch dann sicherzustellen, wenn kein Oberflächenwasser anfällt, welches mit Schadstoffen belastet ist.

Als Oberflächenwasser wird im Rahmen des vorliegenden Vorschlags Wasser bezeichnet, welches über die Bodenoberfläche fließt, z. B. aus Wasser enthaltenden Niederschlägen wie Regen, Schnee oder Hagel. Dieses Wasser kann direkt auf die Bodenoberfläche gelangen, oder es kann von Fahrzeug- oder Gebäudedächern herabströmen. Zudem kann es, bevor es in das Substrat gelangt, über verkehrsbelastete Bodenoberflächen wie Parkplätze oder Straßen strömen, auf denen sich Schadstoffe befinden, beispielsweise Gummiabrieb sowie Öle, Fette, Wachse und Kraftstoffe aus Fahrzeugen.

Das Konzept gattungsgemäßer Substrate besteht darin, einerseits eine gewisse mechanische Filterwirkung bereitzustellen, andererseits jedoch auch Schadstoffe biologisch abzubauen bzw. in ungefährliche einzelne Bestandteile zu zerlegen oder mit anderen Stoffen derart zu rekombinieren, dass insgesamt ungefährliche, nicht mehr als Schadstoffe geltende Substanzen vorliegen.

Das Schadstoffaufkommen ist dabei über den Jahresverlauf unterschiedlich und insbesondere diskontinuierlich. Wäre die Masse an Mikroorganismen so groß, dass sie die auftretenden Schadstoffe innerhalb kürzester Zeit umwandeln könnten, so würden bei ausbleibender Schadstoff-Fracht im Oberflächenwasser die im Substrat vorhandenen Mikorbakterien nach einer gewissen Zeit absterben, zumindest zu einem großer Anteil.

Daher ist in den gattungsgemäßen Substraten Material vorhanden, welches die Schadstoffe zurückhält. Auf diese Weise wird erstens das Nahrungsangebot für die Mikroorganismen, welche die Schadstoffe umsetzen, über die Zeit vergleichmäßigt. Eine Menge an Mikroorganismen, die nicht ausreichend wäre, ein plötzlich auftretendes, hohes Schadstoffaufkommen innerhalb kurzer Zeit zu verarbeiten, reicht auf diese Weise aus, um das Schadstoffaufkommen über längere Zeit zu verarbeiten und es somit trotz der vergleichsweise geringen Menge an Mikroorganismen vollständig umzusetzen. Zweitens wird sichergestellt, dass den Mikroorganismen ausreichend Zeit zur Verfügung steht, die auftretenden Schadstoffe umzusetzen, indem die Schadstoffe nicht - beispielsweise im Rahmen starker Niederschläge - aus dem Substrat ausgewaschen werden, bevor sie durch die Mikroorganismen verarbeitet werden konnten. Somit wird die Wirksamkeit des Substrats bedeutend verbessert, was den Abbau an Schadstoffen angeht, also den Anteil der Schadstoffe, der abgebaut oder umgewandelt wird.

Insbesondere bei verkehrsbelasteten Flächen stellen ölhaltige Schadstoffe einen wesentlichen Anteil an der Schadstofffracht dar, die in das Substrat gelangt.

Der Erfindung liegt die Aufgabe zugrunde, ein gattungsgemäßes Substrat dahingehend zu verbessern, dass dieses einen möglichst vollständigen Abbau der im Oberflächenwasser enthaltende ölhaltigen Schadstoffe sicherstellt.

Diese Aufgabe wird durch ein Substrat mit den Merkmalen des Anspruchs 1 gelöst.

Die Erfindung schlägt mit anderen Worten vor, ein als Rückhaltematerial bezeichnetes Material zu verwenden, welches in besonders hohem Maße ölbindende Eigenschaften aufweist. Ölbindende Eigenschaften können beispielsweise auch von Materialien bereitgestellt werden, die ähnlich wie Katzenstreu aufgebaut sind und aufgrund ihrer Porosität das Öl binden. Allerdings ist bei derartigen Materialien problematisch, dass das Öl aus diesen Materialien auch vorzeitig wieder herausgeschwemmt werden kann, beispielsweise durch Wasser, so dass ein Gemisch aus Wasser und Öl diese Materialien verlässt.

Vorschlagsgemäß ist daher vorgesehen, ein solches Rückhaltematerial zu verwenden, welches Öl zwar zurückhält, Wasser jedoch durchlässt. Derartige Rückhaltematerialien sind aus der Praxis bekannt und handelsüblich, sie werden beispielsweise von der US-amerikanischen Firma AbTech Industries unter dem Produktnamen "Smart Sponge" bereitgestellt, oder von der US-amerikanischen Firma Rubberizer in der Produktsparte "Haz-Mat Response Technologies" angeboten. Es handelt sich dabei um Ölbindemittel, die für Wasser durchlässig sind und das Öl zu einem solchen Ausmaß zurückhalten, dass durch solche ölgetränkten Rückhaltematerialien durchlaufendes Wasser Trinkwasserqualität hat.

Überraschend hat sich herausausgestellt, dass deraritige Materialien problemlos in einem gattungsgemäßen Substrat verwendbar sind, ohne die gewünschte Wirkung anderer Bestandteile des Substrats nachteilig zu beeinflussen, und insbesondere ohne die biologische Aktivität der Mikrobakterien zu beeinträchtigen. Dadurch, dass mit Hilfe eines derartigen Rückhaltematerials Öle lange in dem Substrat zurückgehalten werden können, besteht für die Mikrobakterien ausreichend Zeit, derartige Schadstoffe vollständig umzusetzen. Zudem ist durch die Verwendung derartiger Rückhaltematerialien sichergestellt, dass auch bei auftretenden Niederschlagsereignissen das in das Substrat gelangte Öl nicht aus dem Substrat herausgeschwemmt wird, so dass die Effektivität des Substrats gesteigert wird, die sich einerseits danach bemisst, mit welcher Wasserqualtität in das Substrat gelangtes Wasser anschließend aus dem Substrat austritt, und die sich weiterhin danach bemisst, zu welchem Anteil in das Substrat gelangte Schadstoffe abgebaut und unschädlich gemacht werden.

Vorteilhaft kann ein vorschlagsgemäßes Substrat in einer Versickerungsmulde Anwendung finden, wie sie beispielsweise an Verkehrsflächen vorgesehen werden kann, die vom Straßenverkehr belastet sind, beispielsweise am Rand von Straßen, auf Parkplätzen oder dergleichen. Die dort auftretenden Schadstoffbelastungen umfassen Gummiabrieb von den Reifen der Fahrzeuge, aber auch Kohlenwasserstoffe aus Ölen und Kraftstoffmengen.

Ein vorschlagsgemäßes Substrat kann auch in Schachteinsätzen von Entwässerungsschächten Anwendung finden, beispielsweise in sogenannten Straßeneinläufen oder Gullis.

## Patentansprüche

1. Biologisch aktives Substrat zum Abbau und Zurückhalten von Schadstoffen in Oberflächenwasser,
wobei das Substrat Material enthält, welches Besiedlungsräume für Schadstoffe abbauende Mikrobakterien bereitstellt,
und Material enthält, welches Schadstoffe zurückhaltende Eigenschaften aufweist,
**dadurch gekennzeichnet,**
**dass** das Substrat ein Öl zurückhaltendes, jedoch für Wasser durchlässiges Rückhaltematerial enthält.

2. Substrat nach Anspruch 1,
**dadurch gekennzeichnet,**
**dass** das Rückhaltematerial innerhalb des Substrats als eine Vielzahl von Einzelkörpern verteilt angeordnet ist.

3. Substrat nach Anspruch 1 oder 2,
**dadurch gekennzeichnet,**
**dass** das Rückhaltematerial in Form von Flocken vorliegt.

4. Versickerungsmulde,
**dadurch gekennzeichnet, dass** die Versickerungsmulde ein Substrat nach einem der Ansprüche 1 bis 3 enthält.

5. Schachteinsatz eines Entwässerungsschachts,
**dadurch gekennzeichnet, dass** der Schachteinsatz ein Substrat nach einem der Ansprüche 1 bis 3 enthält.
